# EUROPÄISCHE PATENTSCHRIFT

(11) **EP 1 289 299 B1**
(45) Veröffentlichungstag und Bekanntmachung des Hinweises auf die Patenterteilung: **26.10.2005**
(21) Anmeldenummer: 02018313.3
(22) Anmeldetag: 14.08.2002
(51) Int. Cl.: H04N 7/173, H04N 7/20, H04H 1/00

(54) **Kopfstation**
Head-end
Station principale

(30) Priorität: 31.08.2001 DE 10142699
(43) Veröffentlichungstag der Anmeldung: 05.03.2003
(73) Patentinhaber: Grundig Multimedia B.V., 1083HJ Amsterdam (NL)
(72) Erfinder: Klein, Jürgen, 90473 Nürnberg (DE)
(74) Vertreter: Pröll, Jürgen

(56) Entgegenhaltungen:
- EP-A- 0 757 489
- EP-A- 0 822 718
- EP-A- 0 942 601
- EP-A- 0 963 116
- US-A- 5 285 272

## Beschreibung

Die Erfindung betrifft eine Kopfstation, welche mehrere parallel zueinander angeordnete und an einem oder mehreren gemeinsamen Eingangsanschlüssen angeschlossene Empfangseinheiten sowie mehrere ebenfalls parallel zueinander angeordnete Modulatoren aufweist, die eingangsseitig jeweils an den Ausgang einer der Empfangseinheiten angeschlossen sind und deren Ausgänge mit einem gemeinsamen Ausgangsanschluss der Kopfstation verbunden sind.

Aus EP-A2-0 963 116 ist eine Vorrichtung zur Unterstüzung von Video-on-Demand offenbart. Diese Vorrichtung weist einen File-Server auf, über welchen u.a. auch zeitversetzt Fernsehprogramme in ein Signalverteilersystem eingespeist werden können.
EP-0 942 601 beschreibt einen Videoserver, der mehrere an ein Bussystem angeschlosssene Terminals mit Programmsignalen versorgt. Der Zuschauer kann Programme, die durch Anfangszeit, Endzeit und Programmkanal ausgewählt werden, durch den Videoserver aufzeichnen und zu gewählten Wiedergabezeiten abspielen lassen.

Aus dem von Hüthig Buch Verlag Heidelberg aufgelegten Buch "12-GHz-Satellitenempfang" von Bernhard Liesenkötter, 5. Auflage, 1994, sind bereits Satellitenfernsehsignal-Empfangsanlagen bekannt. Im Abschnitt 4.5.2 dieses Buches auf den Seiten 104 - 106 ist eine Gemeinschaftsempfangsanlage beschrieben, die mit einer zentralen Modulationswandlung arbeitet. Dabei werden zentral in der Empfangsstelle, die beispielsweise auf dem Dachboden eines Wohnblockes oder eines Mehrfamilienhauses vorgesehen sein kann, die von der Außeneinheit der Satellitenempfangsanlage abgeleiteten Fernsehsignale zunächst in einer Empfangseinheit demoduliert und dann im Sinne einer Remodulation in Norm-N-Kanäle umgesetzt, d. h. in VHF- oder UHF-Signale. Diese werden dann in das bestehende Hausantennenverteilnetz eingespeist und zusammen mit terrestrischen Fernsehprogrammen den im Wohnblock oder Mehrfamilienhaus vorhandenen Fernsehempfangsgeräten zugeführt und auf deren Bildschirm wiedergegeben.

Die genannte zentrale Aufbereitung der Satellitenfernsehsignale erfolgt in einer Kopfstation, welche für jedes empfangene Satellitenprogramm einen Aufbereitungszug aufweist. Die Aufbereitungszüge umfassen jeweils eine Empfangseinheit zur Demodulation der Signale und einen Modulator zur Remodulation der Signale. Bei den genannten Aufbereitungszügen handelt es sich jeweils um Module, die bei einer Umrüstung der Anlage oder bei einem Defekt einzeln aus der Kopfstation entnommen und repariert oder durch ein neues Modul ersetzt werden können. Kleinere Kopfstationen enthalten beispielsweise 8 derartige Module bzw. Kanalaufbereitungseinheiten.

Ausgehend von diesem Stand der Technik liegt der Erfindung die Aufgabe zugrunde, einen Weg aufzuzeigen, wie die Nutzungsmöglichkeiten einer Kopfstation erweitert werden können.

Diese Aufgabe wird durch eine Kopfstation mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass mittels der Kopfstation empfangene Signale in der Kopfstation selbst nichtflüchtig abgespeichert und zu einem beliebigen späteren Zeitpunkt von dort ausgelesen und einem Wiedergabe-Endgerät zugeführt werden können.

Vorzugsweise weist der in der Kopfstation vorgesehene Festplattenspeicher, der aus mehreren Speichereinheiten bestehen kann, mehrere Speicherbereiche auf, von denen beispielsweise jeder einer der Empfangseinheiten der Kopfstation zugeordnet ist. In diese Speicherbereiche können gleichzeitig Signale eingespeichert werden. Auch ein gleichzeitiges Auslesen von Signalen aus diesen Speicherbereichen kann durchgeführt werden.

Zur Steuerung der Abspeicher- und Auslesevorgänge des Festplattenspeichers ist eine Steuereinheit vorgesehen, die vorzugsweise als Mikrocomputer ausgebildet ist. Die Steuereinheit weist einen Programmwunschspeicher auf, der mit Programmwunschdaten gefüllt werden kann, die über die Bedieneinheiten der an die Kopfstation angeschlossenen Endgeräte eingegeben werden. Die eingespeicherten Programmwunschdaten werden von der Steuereinheit dazu verwendet, eine zeitgerechte Aufzeichnung der jeweils gewünschten Sendung in die Wege zu leiten. Folglich besteht für den Benutzer die Möglichkeit, eine Kopfstation mittels der Bedieneinheit seines Widergabe-Endgerätes derart zu programmieren, dass die Kopfstation für ihn eine gewünschte Sendung aufzeichnet. Die aufgezeichnete Sendung kann dann zu einem beliebigen späteren Zeitpunkt vom Benutzer aus der Kopfstation abgerufen werden.

Weitere vorteilhafte Eigenschaften der Erfindung ergeben sich aus der nachfolgenden Erläuterung eines Ausführungsbeispiels anhand der Figur. Diese zeigt ein Blockschaltbild einer Satellitenempfangsanlage, welche eine Satellitenantenne 1, eine Kopfstation 2 und an die Kopfstation angeschlossene Wiedergabe-Endgeräte aufweist. Bei letzteren handelt es sich um ein analoges Fernsehgerät 3, eine Settop-Box 4, ein an die Settop-Box 4 angeschlossenes analoges Fernsehgerät 5, ein digitales Fernsehgerät 6 und ein weiteres analoges Fernsehgerät 7. Die genannten Wiedergabe-Endgeräte sind in verschiedenen Wohnungen eines Mehrfamilienhauses positioniert und über das Hausantennen-Verteilnetz mit einem Ausgangsanschluss 9 der Kopfstation 2 verbunden, wobei letztere auf dem Dachboden des Mehrfamilienhauses aufgestellt ist. Die Kopfstation 2 ist an die Satellitenantenne 1 angeschlossen, wobei die von der Satellitenantenne abgeleiteten Signale an einen Eingangsanschluss 8 der Kopfstation geführt sind.

Die der Kopfstation 2 über den Eingangsanschluss 8 zugeführten Signale werden einem Eingangsverteiler 24 zugeführt und über diesen an mehrere parallel zueinander angeordnete Empfangseinheiten geleitet. Von diesen sind in der Figur ein analoger Satellitenempfänger 10, ein analoger Satellitenempfänger 11 und ein digitaler Satellitenempfänger 12 gezeigt. Diese Empfangseinheiten sind jeweils auf einen Empfangskanal abgestimmt und dienen zur Demodulation des empfangenen Signals.

Die Ausgänge der Empfangseinheiten 10, 11, 12 sind jeweils mit einem Modulator 16, 17, 18 verbunden, in welchem das Ausgangssignal der jeweiligen Empfangseinheit durch eine Modulation in jeweils einen vorgegebenen VHF- oder UHF-Kanal umgesetzt wird. Die Ausgänge der Modulatoren 16, 17, 18 sind über eine Sammelschiene 25 mit dem gemeinsamen Ausgangsanschluss 9 der Kopfstation verbunden. Über diesen Ausgangsanschluss 9 werden die Ausgangssignale der Modulatoren den an die Kopfstation angeschlossenen Wiedergabe-Endgeräten zugeführt.

In einer weiteren vorteilhaften Ausgestaltung der Erfindung ist vorgesehen, dass mehrere Empfangseinheiten an nur einem Modulator 16, 17, 18 bzw. eine Empfangseinheit an mehrere Modulatoren angeschlossen sind.

Weiterhin weist die gezeigte Kopfstation einen Festplattenspeicher 14 auf. Dieser Festplattenspeicher, der aus mehreren Speichereinheiten bestehen kann, hat mehrere Speicherbereiche. In einer vorteilhaften Ausgestaltung der Erfindung ist jeder Speicherbereich einer der Empfangseinheiten 10, 11, 12 zugeordnet.
Der Ausgang der Empfangseinheit 10 ist über einen A/D-Wandler 13a mit einem Eingang des Festplattenspeichers 14 verbunden. Der Ausgang der Empfangseinheit 11 steht über einen A/D-Wandler 13b mit einem Eingang des Festplattenspeichers 14 in Verbindung. Der Ausgang der Empfangseinheit 12, an welchem digitale Videosignale vorliegen, ist direkt mit einem Eingang des Festplattenspeichers 14 verbunden.

Ausgangsseitig ist der Festplattenspeicher 14 über einen D/A-Wandler 19a mit einem weiteren Modulator 20, über einen D/A-Wandler 19b mit einem weiteren Modulator 21 und direkt mit einem weiteren Modulator 22 verbunden. Diese weiteren Modulatoren 20, 21, 22 dienen dazu, die aus dem Festplattenspeicher 14 ausgelesenen Signale durch eine Modulation in jeweils einen vorgegebenen VHF- oder UHF-Kanal umzusetzen. Die Ausgangssignale der weiteren Modulatoren 20, 21, 22 sind über die Sammelschiene 25 mit dem gemeinsamen Ausgangsanschluss 9 der Kopfstation verbunden. Die Ausgangssignale der Modulatoren 16, 17, 18, 20, 21, 22, die sämtlich über die Sammelschiene 25 dem Ausgangsanschluss 9 der Kopfstation zugeführt werden, liegen im Frequenzbereich zwischen 48 MHZ und 855 MHZ, bei herkömmlichen koaxial ausgebildeten Antennenverteilnetzen.

Die Steuerung der Einschreib- und Auslesevorgänge des Festplattenspeichers 14 erfolgt durch eine Steuereinheit 15, die vorzugsweise als Mikrocomputer ausgebildet ist. Die Steuereinheit nimmt diese Steuerung in Abhängigkeit von Programmwunschdaten vor, die in einem Programmwunschspeicher 15a abgespeichert sind. Die Programmwunschdaten umfassen die Bezeichnung eines bestimmten Wunschkanals sowie die Anfangs- und Endzeit der in diesem Wunschkanal übertragenen Wunschsendung.

Die Eingabe der Programmwunschdaten erfolgt mittels der Bedieneinheit des jeweiligen Wiedergabe-Endgerätes. Dabei werden die eingegebenen Bedienbefehle vom jeweiligen Endgerät aus über das Hausantennen-Verteilnetz der Kopfstation 2 über deren Ausgangsanschluss 9 zugeführt, über welchen folglich eine bidirektionale Signalübertragung erfolgt. Vom Anschluss 9 aus werden die genannten Bedienbefehle über die Sammelschiene 25 einem Transceiver 23 zugeführt. Dieser wandelt die Bedienbefehle, die in einem Frequenzbereich von etwa 10 MHZ liegen und eine Bandbreite von etwa 100 KHZ aufweisen, in Datensignale um, die dem Mikrocomputer 15 zugeführt und in dessen Programmwunschspeicher 15a abgelegt werden. Folglich hat der Benutzer die Möglichkeit, die Kopfstation mittels der Bedieneinheit seines Endgerätes derart zu programmieren, dass diese die einprogrammierte Wunschsendung zeitgerecht im Festplattenspeicher 14 aufzeichnet.

Unabhängig davon können auch von anderen Benutzern derartige Programmiervorgänge vorgenommen werden, so dass der Programmwunschspeicher 15a mit einer Vielzahl von Programmwunschdaten gefüllt sein kann. Diese Programmwunschdaten können auch sich zeitlich überschneidende Sendungen betreffen, da mittels der gezeigten Kopfstation auch eine gleichzeitige Aufzeichnung mehrerer verschiedener Sendungen durchgeführt werden kann.
In vorteilhafter Weise überwacht der Mikrocomputer 15, ob aufgrund des zuletzt eingegebenen Programmierbefehls die Kapazität des Programmwunschspeichers 15a oder des Festplattenspeichers 14 überschritten wird. Ist dies der Fall, dann werden die dem letzten Programmierbefehl entsprechenden Programmwunschdaten nicht im Programmwunschspeicher 15a abgespeichert, sondern vom Mikrocomputer 15 ein Warn- bzw. Fehlersignal generiert. Dieses Warn- bzw. Fehlersignal wird über den Transceiver 23 und die Sammelschiene 25 dem Ausgangsanschluss 9 zugeführt und von dort aus über das Hausantennen-Verteilnetz an das jeweilige Endgerät weitergeleitet. Auf diese Weise wird der Benutzer darüber informiert, dass seinem Aufzeichnungswunsch nicht entsprochen werden kann. Der Benutzer hat dann die Möglichkeit, eine von ihm selbst vorgenommene frühere Programmierung zu löschen, um wieder freie Speicherkapazität im Programmwunschspeicher 15a bzw. dem Festplattenspeicher 14 zu schaffen.

Ist die jeweilige Wunschsendung im Festplattenspeicher 14 aufgezeichnet, dann kann sie vom jeweiligen Benutzer zu einem beliebigen späteren Zeitpunkt durch die Eingabe eines entsprechenden Bedienbefehls an der Bedieneinheit seines Endgerätes abgerufen werden. Dieser Bedienbefehl wird vom Endgerät aus über das Hausantennen-Verteilnetz dem Anschluss 9 der Kopfstation 2 zugeführt und von dort aus über die Sammelschiene 25 und den Transceiver 23 an den Mikrocomputer 15 weitergeleitet. Dieser steuert dann den Festplattenspeicher 14 derart an, dass die dem jeweiligen Benutzer zugeordnete Aufzeichnung aus dem Festplattenspeicher 14 ausgelesen und über einen der Modulatoren 20, 21, 22, die Sammelschiene 25, den Ausgangsanschluss 9 und das Hausantennen-Verteilnetz an das jeweilige Endgerät weitergeleitet wird.

In vorteilhafter Weise informiert der Mikrocomputer 15 über den Transceiver 23 das jeweilige Endgerät bzw. den Benutzer darüber, über welchen der weiteren Modulatoren 20, 21, 22 das aus dem Festplattenspeicher 14 ausgelesene Signal wiedergegeben wird. Dadurch kann das jeweilige Endgerät entweder automatisch oder durch eine entsprechende Umschaltung mittels der Bedieneinheit auf den jeweils richtigen Kanal eingestellt werden.

Alternativ dazu ist es auch möglich, dass das jeweilige Endgerät die in Frage kommenden VHF- bzw. UHF-Kanäle durchscannt und bei diesem Durchscannen den jeweils richtigen Kanal erkennt. Dies kann beispielsweise durch eine Auswertung einer zusammen mit dem Videosignal übertragenen Programmkennung geschehen.

Grundsätzlich bestehen bei dem erfindungsgemäßen Konzept die Möglichkeiten, entweder jedem Endgerät individuell einen Speicherbereich des Festplattenspeichers 14 und des Programmwunschspeichers 15a sowie einen der weiteren Modulatoren 20, 21, 22 fest zuzuordnen oder alternativ dazu die Speicherbereiche des Festplattenspeichers 14 und des Programmwunschspeichers 15 sowie die weiteren Modulatoren 20, 21, 22 den Endgeräten bedarfsweise flexibel zuzuordnen.

Ergänzend ist aufzuzeigen, dass mehrere Ausgänge des Festplattenspeichers 14 von nur einem Modulator umgesetzt werden kann. Zu beachten ist jedoch, dass ein analoger Modulator nur ein Fernsehprogramm umsetzten kann, ein digitaler Modulator aber bis zu acht Fernsehprogramm gleichzeitig umsetzen kann.

## Patentansprüche

1. Kopfstation, aufweisend:
- mehrere parallel zueinander angeordnete und an einem oder mehreren gemeinsamen Eingangsanschlüssen der Kopfstation angeschlossene Empfangseinheiten (10, 11, 12) und
- mehrere parallel zueinander angeordnete Modulatoren(16, 17, 18), die eingangsseitig jeweils an mindestens einem Ausgang einer der Empfangseinheiten (10, 11, 12) angeschlossen sind und deren Ausgänge mit einem gemeinsamen Ausgangsanschluss (9) der Kopfstation (2) verbunden sind,
- die Kopfstation (2) weiterhin einen Festplattenspeicher (14) aufweist, der mit dem Ausgang mindestens einer der Empfangseinheiten (10, 11, 12) verbunden ist,
**dadurch gekennzeichnet, dass**
- der Festplattenspeicher (14) mindestens einen Ausgang aufweist, und dieser mit einem weiteren Modulator verbunden, ist
- der Ausgang des weiteren Modulators mit dem gemeinsamen Ausgangsanschluss (9) der Kopfstation verbunden ist, wobei
- der gemeinsame Ausgangsanschluss (9) der Kopfstation (2) zu einer bidirektionalen Signalübertragung vorgesehen ist,
- die über den Ausgangsanschluss (9) der Kopfstation (2) übertragene Ausgangssignale die Ausgangssignale des weiteren Modulators sind
- die über diesen Ausgangsanschluss (9) übertragenen Eingangssignale der Kopfstation (2) Bedienbefehlen entsprechende Signale sind,
- die den Bedienbefehlen entsprechenden Signale Informationen über einen gewünschten Empfangskanal und einen gewünschten Empfangszeitraum aufweisen, und
- eine Steuereinheit (15) einen Programmwunschspeicher (15a) aufweist, der zur Abspeicherung dieser Signale vorgesehen ist und dass die Steuereinheit beim Erreichen der gewünschten Empfangszeit den Festplattenspeicher (14) zur Abspeicherung der über den gewünschten Empfangskanal übertragenen Videosignale ansteuert,
die Steuereinheit (15) beim Erkennen eines vorgegebenen Bedienbefehls den Festplattenspeicher (14) zur Wiedergabe der abgespeicherten Videosignale ansteuert und den wiedergegebenen Signalen einen der weiteren Modulatoren (20, 21, 22) zuordnet und die Steuereinheit (15) ein den zugeordneten weiteren Modulator (20, 21, 22) charakterisierendes Informationssignal generiert, welches über einen Transceiver (23) am gemeinsamen Ausgangsanschluss (9) der Kopfstation zur Verfügung gestellt wird.

2. Kopfstation nach Anspruch 1,
**dadurch gekennzeichnet, dass**
der Festplattenspeicher (14) mehrere Speicherbereiche aufweist und jeder dieser Speicherbereiche zur Abspeicherung eines Videosignals vorgesehen ist, welches von einer der Empfangseinheiten (10, 11, 12) abgeleitet ist.

3. Kopfstation nach einem der Ansprüche 1 oder 2,
**dadurch gekennzeichnet, dass**
der weitere Modulator ein analoger oder digitaler Modulator ist und/oder der digitale Modulator bis zu 8 Programme zugleich empfängt und umsetzt.

4. Kopfstation nach einem der Ansprüche 1 bis 3,
**dadurch gekennzeichnet, dass**
die Kopfstation (2) eine Steuereinheit (15) aufweist, die zur Steuerung der Einschreibvorgänge in den Festplattenspeicher (14) und zur Steuerung der Auslesevorgänge aus dem Festplattenspeicher (14) vorgesehen ist.

5. Kopfstation nach einem der Ansprüche 1 bis 4,
**dadurch gekennzeichnet, dass**
zu den über den Ausgangsanschluss (9) übertragenen Ausgangssignalen weiterhin Steuersignale gehören, die für ein an den Ausgangsanschluss angeschlossenes externes Wiedergabegerät (3, 4, 5, 6, 7) vorgesehen sind und/oder die Steuereinheit (15) mit dem gemeinsamen Ausgangsanschluss (9) über einen Transceiver (23) verbunden ist.

6. Kopfstation nach einem der Ansprüche 1 bis 5
**dadurch gekennzeichnet, dass**
die über den gemeinsamen Ausgangsanschluss (9) übertragenen Bedienbefehle oder Informationssignale eine Information über die jeweils zugehörige Signalquelle enthalten.

7. Kopfstation nach einem der Ansprüche 1 bis 6,
**dadurch gekennzeichnet, dass**
die Steuereinheit (15) zur Durchführung einer Vielzahl von gewünschten Aufzeichnungsvorgängen ausgelegt ist und weiterhin bei einem Überschreiten der Speicherkapazität des Programmwunschspeichers (15a) oder des Festplattenspeichers (14) ein Warnsignal generiert, welches über den Transceiver (23) geleitet und am gemeinsamen Ausgangsanschluss (9) der Kopfstation ausgegeben wird.

## Claims

1. Headend, having:
- several receiving units (10, 11, 12) arranged parallel to one another and connected to one or more common input terminals of the headend and
- several modulators (16, 17, 18) arranged parallel to one another and connected on the input side in each case to at least one output of one of the receiving units (10, 11, 12) and the outputs of which are connected to a common output terminal (9) of the headend (2)
- the headend (2) additionally has hard disk storage (14), which is connected to the output of at least one of the receiving units (10, 11, 12),
**characterised in that**
- the hard disk storage (14) has at least one output and this is connected to a further modulator
- the output of the further modulator is connected to the common output terminal (9) of the headend, wherein
- the common output terminal (9) of the headend (2) is provided for bi-directional signal transmission
- the output signals transmitted via the output terminal (9) of the headend (2) are the output signals of the further modulator
- the input signals of the headend (2) transmitted via this output terminal (9) are signals corresponding to operating commands
- the signals corresponding to operating commands have information on a desired receiving channel and a desired receiving time and
- a control unit (15) has program option storage (15a) provided for storing these signals and, when the desired receiving time is reached, the control unit drives the hard disk storage (14) to store the video signals transmitted via the desired receiving channel
- on recognising a preset operating command the control unit (15) drives the hard disk storage (14) to reproduce the stored video signals and allocates to the reproduced signals one of the further modulators (20, 21, 22) and the control unit.(15) generates an information signal which characterises the allocated further modulator (20, 21, 22) and is made available via a transceiver (23) on the common output terminal (9) of the headend.

2. Headend according to claim 1, **characterised in that** the hard disk storage (14) has several storage areas and each of these storage areas is provided for storing a video signal derived from one of the receiving units (10, 11, 12).

3. Headend according to one of claims 1 or 2, **characterised in that** the further modulator is an analog or digital modulator and/or the digital modulator receives and converts up to 8 programs simultaneously.

4. Headend according to one of claims 1 to 3, **characterised in that** the headend (2) has a control unit (15) provided for controlling the write-in processes into the hard disk storage (14) and for controlling the read-out processes from the hard disk storage (14).

5. Headend according to one of claims 1 to 4, **characterised in that** the output signals transmitted via the output terminal (9) additionally include control signals provided for an external reproduction device (3, 4, 5, 6, 7) connected to the output terminal and/or the control unit (15) is connected to the common output terminal (9) via a transceiver (23).

6. Headend according to one of claims 1 to 5, **characterised in that** the operating commands or information signals transmitted via the common output terminal (9) contain an item of information on the associated signal source in each case.

7. Headend according to one of claims 1 to 6, **characterised in that** the control unit (15) is configured for performing a multiplicity of desired recording processes and, furthermore, if the storage capacity of the program option storage (15a) or the hard disk storage (14) has been exceeded, generates a warning signal which is conducted via the transceiver (23) and emitted on the common output terminal (9) of the headend.

## Revendications

1. Station de tête, comportant :
- plusieurs unités de réception (10,11,12) disposées en parallèle entre elles et connectées à une ou plusieurs bornes d'entrée communes de la station de tête, et
- plusieurs modulateurs (16,17,18) disposés en parallèle entre eux et qui sont connectés côté entrée respectivement à au moins une sortie de l'une des unités de réception (10,11,12) et dont les sorties sont reliées à une borne de sortie commune (9) de la station de tête (2),
- la station de tête (2) comporte en outre une mémoire à disque dur (14), qui est reliée à la sortie d'au moins l'une des unités de réception (10,11,12),
**caractérisée en ce que**
- la mémoire à disque dur (14) comporte au moins une sortie, et que cette dernière est reliée à un autre modulateur,
- la sortie de l'autre modulateur est reliée à la borne de sortie commune (9) de la station de tête,
dans lequel
- la borne de sortie commune (9) de la station de tête (2) est prévue pour une transmission bidirectionnelle de signaux,
- les signaux de sortie transmis au moyen de la borne de sortie (9) de la station de tête (2) sont les signaux de sortie de l'autre modulateur,
- les signaux d'entrée, transmis par l'intermédiaire de cette borne de sortie (9), de la station de tête (2) sont des signaux correspondant à des instructions de commande;
- des signaux correspondant aux instructions de commande comportent des informations concernant un canal de réception désiré et un intervalle de temps de réception désiré, et
- une unité de commande (15) comporte une mémoire de souhaits de programmes (15a), qui est prévue pour la mémorisation de ces signaux, et que, lorsque l'instant de réception désiré est atteint, l'unité de commande commande la mémoire à disque dur (14) pour la mémorisation des signaux vidéo transmis par l'intermédiaire du canal de réception désiré, et
- que lors de l'identification d'une instruction de commande prédéterminée, l'unité de commande (15) commande la mémoire à disque dur (14) pour la reproduction des signaux vidéo mémorisés et associe aux signaux reproduits l'un des autres modulateurs (20,21,22), et l'unité de commande (15) génère un signal d'information, qui caractérise l'autre modulateur associé (20,21,22) et, par l'intermédiaire d'un émetteur-récepteur (23), est rendue disponible sur la borne de sortie commune (9) de la station de tête.

2. Station de tête selon la revendication 1, **caractérisée en ce que** la mémoire à disque dur (14) comporte plusieurs zones de mémoire et chacune de ces zones de mémoire est prévue pour la mémorisation d'un signal vidéo, qui est dérivé de l'une des unités de réception (10,11,12).

3. Station de tête selon l'une des revendications 1 ou 2, **caractérisée en ce que** l'autre modulateur est un modulateur analogique ou numérique et/ou le modulateur numérique reçoit simultanément jusqu'à 8 programmes et les convertit.

4. Station de tête selon l'une des revendications 1 à 3, **caractérisée en ce que** la station de tête (2) comporte une unité de commande (15) qui est prévue pour la commande des processus d'écriture dans la mémoire à disque dur (14) et pour la commande des processus de lecture à partir de la mémoire à disque dur (14).

5. Station de tête selon l'une des revendications 1 à 4, **caractérisée en ce que** les signaux de sortie transmis par l'intermédiaire de la borne de sortie (9) incluent en outre des signaux de commande, qui sont prévus pour un appareil externe de reproduction (3,4,5,6,7) qui est connecté à la borne de sortie et/ou l'unité de commande (15) est reliée à la borne de sortie commune (9) par l'intermédiaire d'un émetteur-récepteur (23).

6. Station de tête selon l'une des revendications 1 à 5, **caractérisée en ce que** les instructions de commande ou les signaux d'informations, transmis par l'intermédiaire de la borne de sortie commune (9), contiennent une information concernant la source de signaux respectivement associée.

7. Station de tête selon l'une des revendications 1 à 6, **caractérisée en ce que** l'unité de commande (15) est conçue pour la mise en oeuvre d'une multiplicité de processus d'enregistrement désirés et en outre dans le cas d'un dépassement de la capacité de la mémoire de souhaits de programmes (15a) ou de la mémoire à disque dur (14), génère un signal d'avertissement, qui est transmis par l'intermédiaire de l'émetteur-récepteur (23) et est délivré sur la borne de sortie commune (9) de la station de tête.
